# EUROPEAN PATENT SPECIFICATION

(11) **EP 1 091 305 B1**
(45) Date of publication and mention of the grant of the patent: **29.10.2003**
(21) Application number: 00125246.9
(22) Date of filing: 07.08.1998
(51) Int. Cl.: G06F 17/30

(54) **Method for upgrading a database**
Verfahren zum Erweitern einer Datenbank
Procédé d'extension d'une base de données

(30) Priority: 08.08.1997 DE 19734413
(43) Date of publication of application: 11.04.2001
(62) Divisional of application: 98946302.1
(73) Proprietor: Telefonaktiebolaget L M Ericsson (Publ), 126 25 Stockholm (SE)
(72) Inventor: Sinander, Niklas, 421 47 Västra Frölunda (SE)
(74) Representative: HOFFMANN - EITLE

(56) References cited:
- WO-A-97/14091
- US-A- 5 359 730
- US-A- 5 396 623

## Description

The invention relates to a method for upgrading databases including a change of the database format.

Relational databases are used to handle the storage and retrieval of data for different applications and environments. Databases of this kind run on computer systems. When new functionality shall be added to a database, i.e. when the database is upgraded, the format in which the data is stored very often has to be changed as well. Usually, during the change access to the database must be denied to avoid inconsistency. In other words, it is not allowed to add or change (update) data while the change of the database functionality and format takes place. At least, the database is not accessible during certain phases of an upgrade which phases should be minimized.

Further, if the upgrade of the database fails it must be possible to return to the previous state of the database. Data changes that have been applied during or after the upgrade have to be taken into account as well as data changes queued to be applied.

A conventional solution to the above mentioned problem is to use an additional system during the upgrade. The additional system is a fully operable system with all the functionality of the original system. Extra hardware and software is required to log all data changes during the upgrade of the database. Before the upgrade, the database is copied to the additional system, and a logging mechanism is initiated , for example, in the original system. The upgrade of the database is then performed in the additional system while the original system continues to operate as before but also logs all data changes during the upgrade. When the database upgrade is finished, all logged data changes are applied to the upgraded database in the additional system. If the upgrade fails, the additional system is simply disconnected and the original system continues with its normal operation, however, without additionally logging data changes any longer.

The above method for upgrading a database is disadvantageous since an additional system has to be installed and brought to the site where the database is to be upgraded. During the upgrade double software licenses are need since on both the original and the additional system databases run in parallel for a certain time. Further, it turns out to be quite complex to manage the database upgrade due to all manual intervention necessary.

United States Patent 5, 359, 730 discloses a dynamic software update facility (DSUF) for the purpose of non-disruptively replacing old operating system programs or modules with new updated versions thereof while providing continuous availability and operation of the system. Every invocation of the old version is intercepted by the system and the DSUF then determines the state of the invoking process and passes control to the old version if the process is "unsafe" and to the new version only if the process is "safe".

International Application WO97/14091 discloses an object-oriented system with a method update mechanism for making changes to existing methods and a method call manager which enables active programs to continue to use old versions of methods while at the same time providing access to new method versions when programs are reactivated or activated for the first time.

Therefore, the problem to be solved by the invention is to provide a method for upgrading a database including a change of the database format which method avoids extra hardware and software, limits the interruption of the database operation to a minimum, and allows a save return to the original state of the database in case of a failure during the upgrade.

The above problem is solved by a method as set out in claim 1 for upgrading a database using a table for storing data and a component providing database functionality, said database running on a computer system, comprising the steps of:
- creating new a table in said database;
- copying and/or transforming data from said table to said new table;
- adding a new version of said component providing database functionality corresponding to said new table to said database; and
- adding an additional, component providing database fonctionality to the database which refers to both the previous version and the new version of the component providing database fonctionality, whereby data is processed in both the old and the new table, whenever the component providing database fonctionality is used, for causing data processing to take place in accordance with the previous version and the new version of the

For creating a link to said additional a systemtable can be used. The systemtable can be a table of the database. As an alternative or in addition a configuration file can be used for creating a link to said additional . The configuration file can be stored on a storage medium of the computer system. the <> is used

The components of the database are stored procedures, trigger, indexes or tables. The new version of the table may have a format different from the format of the old version of the table.

The invention will be described in greater detail further below where reference is made to the drawings.
Figure 1 shows a diagram of a computer system hosting a database and workstations accessing the database.
Figure 2a shows a diagram illustrating an upgrade of a database on table level according to the invention.
Figure 2b shows a diagram illustrating an upgrade of a database on page level according to the invention.
Figure 3 shows a diagram of a computer system using a systemtable for upgrading a database according to the invention.
Figure 4 shows a diagram of a computer system using a configuration file for upgrading a database according to the invention.

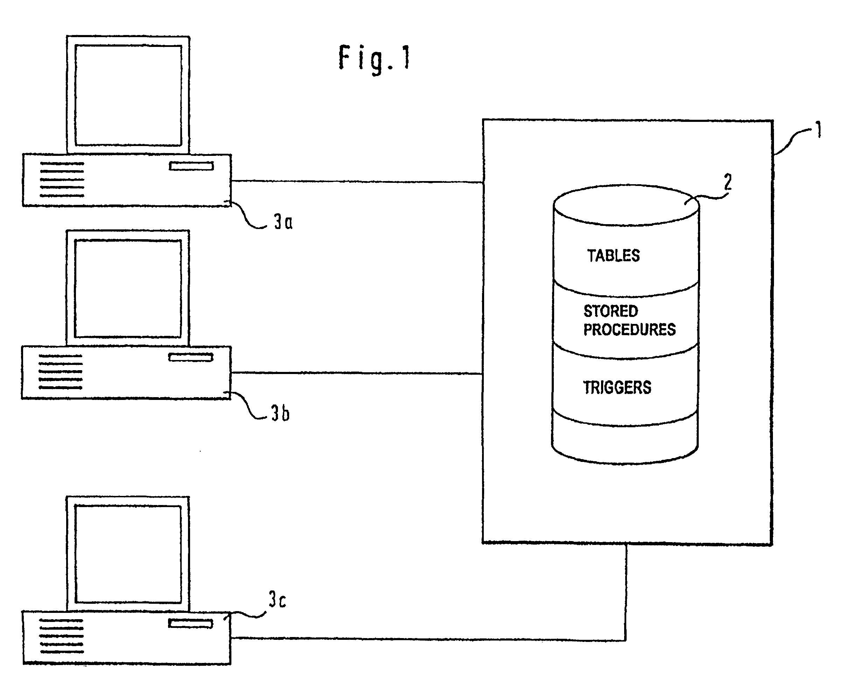

Figure 1 shows a computer system 1 hosting a database 2 on an appropriate storage medium, for example a hard disk or a group of hard disks. Users access the information or data stored in the database, for example, from a terminal or from their workstations 3a, 3b, ... which are connected to the computer system 1 either directly or via a local or wide area network (LAN or WAN). The database 2 comprises tables, stored procedures, triggers, indexes etc. all of which provide certain database functions, respectively.

When an upgrade of the database is required, changes will made to all or some of the components providing database functionality. Usually new and/or additional functions are provided by means of new and/or additional stored procedures, triggers and so on. This sometimes also requires that changes are made to the format of the tables of the database.

According to the invention new tables are created to receive the data stored in the old tables, which are the tables used by the database until the upgrade of the database. Data are copied and/or transformed into the new tables during which process the data are adapted to the new format of the tables if required. To avoid downtime, i.e. periods during which the users cannot access the database, the process of copying and/or transforming data from the old tables to the new tables needs special consideration. According to the invention, data sets of a predetermined granularity are defined within the tables which data sets are handled jointly during the upgrade process to reduced the time periods during which the system is not accessible.

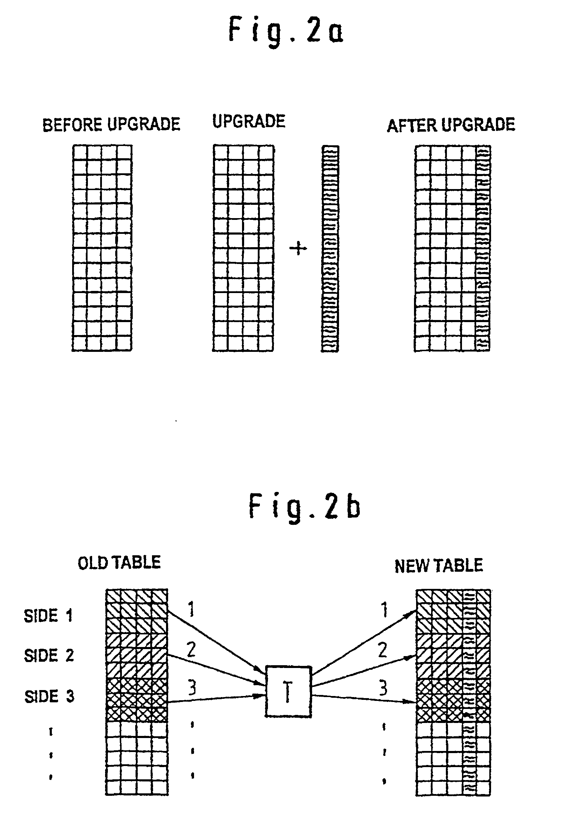

As shown in Figure 2a, if an upgrade is based on table level (granularity I), the whole table to be upgraded is modified in one operation. This approach should be chosen where the modification is a fast operation, for example adding a column with a default value. While a table is upgraded, access to the table as a whole is denied to avoid inconsistency. As shown in Figure 2b, if the modification of a table is a more complicated operation that takes longer time, the table is upgraded on page level (granularity II). A page can be understood to be an internal system unit of a specific size, for example 1024 Bytes, which usually comprises - completely or partly - one or more related information units such as fields or records. By denying access to a page, one or more records of a table are locked. For upgrading on page level, a new table is installed and data from the old table is copied and/or transformed to the new table as indicated by the operator T in Figure 2b. While the table is upgraded, access to only the page currently processed by operator T is denied to avoid inconsistency.

Moreover, both the old and the new tables have to be synchronized as far as data changes and new entries are concerned. By updating both the new and the old tables, as proposed by the invention, not only data consistency is achieved but also the option to dismiss the upgrade and continue operation of the original system. The update of data in the old and the new table is an atomic operation, i.e. access is denied to the table or the page until both tables are updated. Preferably, an update of data is performed in the new tables only where data sets have already been copied and/or transformed from the old tables to the new tables.

To perform an upgrade of tables of a database according to the invention, the remaining components providing database functionality like stored procedures, trigger, indexes, etc. have to exist in an old version as well as in a new version. To avoid any conflict while accessing a component of the database, like stored procedures, a method for handling different versions of stored procedures or the like is required. Three methods will be discussed in the following.

A first method for handling versions of database components will be described with special emphasis on stored procedures of the database. The skilled person will understand that this process can also be performed for other components of a database comparable to stored procedures.

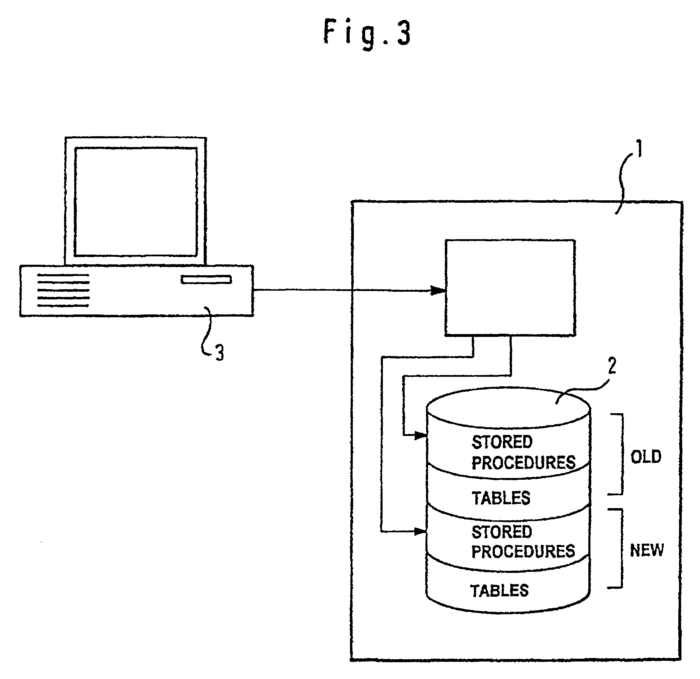

As shown in Figure 3 a systemtable is used during the upgrade process which systemtable holds references to all or just thoses stored procedure which are to be upgraded, i.e. replaced by stored procedure of a new version. All or just thoses stored procedure which are to be upgraded are referenced through the systemtable during the upgrade process. A systemtable according to the invention may look as follows:

**Table 1**

| name of stored procedure known to the system | base version | target version | upgrade version |
|---|---|---|---|
| sp_a | sp_a_1.0 | sp_a_1.1 | sp_a_upgr |
| | | | |
| sp_b | sp_b | - | - |
| | | | |
| sp_c | sp_c_1.0 | sp_c_1.1 | sp_c_upgr |
| | | | |
| ... | ... | ... | ... |

During normal operation the entries in the systemtable refers only to one set of stored procedures, i.e. the base version. When a workstation accesses the database the system looks up the momentarily valid name or version of the stored procedure to which the specific transaction initiated by the workstation is linked. For example, if the access from a workstation requires that stored procedure sp_a is processed the system will look up the valid version of stored procedure sp_a in the systemtable. In the above table and during normal operation, the valid version of stored procedure sp_a is sp_a_1.0 which is then used by the system to perform the transaction requested by the workstation.

In case of an upgrade of the database, new versions of all or some stored procedures are to be installed in the database. It is also possible that a new stored procedure is added to the database. According to the invention, the systemtable is updated with names/versions of the new stored procedures, i.e. the target versions are added. To keep old and new tables of the database synchronized additional stored procedures sp_a_upgr and sp_c_upgr are added to the systemtable. The additional stored procedures sp_a_upgr and sp_c_upgr are used only during the upgrade process and use the new and the old stored procedures to update both the new and the old tables, respectively, in accordance with transactions initiated by the workstations.

For example, during an upgrade the additional stored procedure sp_a_upgr initiates in the database two branches of processing on the basis of base version sp_a_1.0 and new version sp_a_1.1 whereby data is processed and updated in both the new and the old tables of the database system. With respect to stored procedure sp_b, there exists no additional stored procedure since stored procedure sp_b is not upgraded, i.e. remains the same in the old and the new database. The system will refer to the basic version sp_b in such case and use the base version for both the old and the new tables.

The switch over from the old stored procedures to the new stored procedures would be to deny access to the systemtable, update the references so that the desired stored procedures are referenced and to grant access to the systemtable. The updating of references is a very fast operation, so the users of the system will only experience a small delay and no downtime.

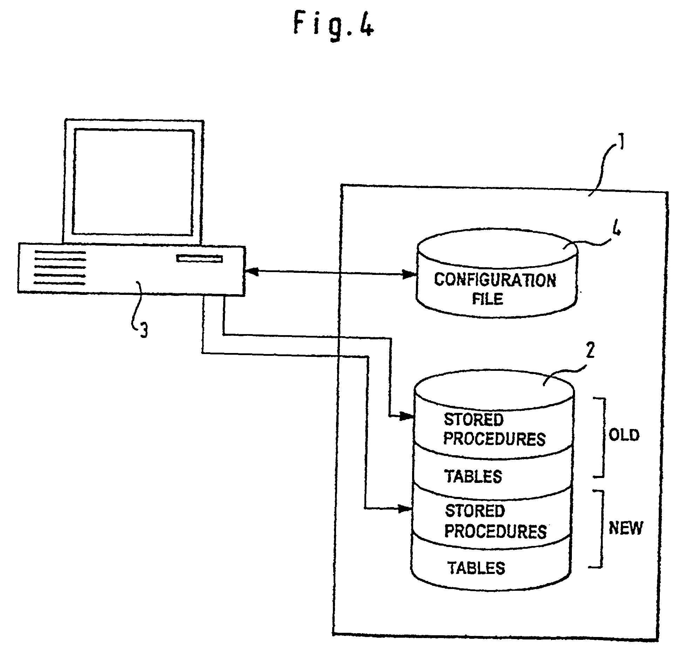

A second method for handling versions of database components will be described in the following. As shown in Figure 4 a configuration file is used during the upgrade process which file holds references to all or just thoses stored procedure which are to be upgraded, i.e. replace by stored procedure of a new version. All or just thoses stored procedure which are to be upgraded are referenced through the configuration file during the upgrade process. The configuration file is stored on a separate storage media 4 provided in the computer system 1 or the storage media on which the database 2 is also stored.

Before the database is accessed by an entity (e.g. an application) from a workstation 3, the configuration file is read to see which stored procedure to use. If there is no entry in the configuration file for a specific stored procedure, the stored procedure as known to the system is used. A configuration file according to the invention can be a simple text file and may look as follows:

**Table 2**

| |
|---|
| # UPGRADE CONFIGURATION FILE # |
| #ENTRIES: name of stored procedure known to the system; #base version; target version; upgrade version |
| sp_a; sp_a_1.0; sp_a_1.1; sp_a_upgr |
| sp_b; sp_b |
| sp_c; sp_c_1.0; sp_c_1.1;sp_c_upgr |
| ... |

During normal operation the entries in the configuration file refer only to one set of stored procedures, i.e. the base version. When a workstation accesses the database the system looks up the momentarily valid name or version of the stored procedure to which the specific transaction initiated by the workstation is linked. For example, if the access from a workstation requires that stored procedure sp_a is processed the system will look up the valid version of stored procedure sp_a in the configuration file. In the above file, the valid version of stored procedure sp_a is sp_a_1.0 which is then used by the system to perform the transaction requested by the workstation.

In case of an upgrade of the database, new versions of all or some stored procedures are to be installed in the database. It is also possible that a new stored procedure is added to the database. According to the invention, the configuration file is updated with names/versions of the new stored procedures, i.e. the target versions are added. To keep old and new tables of the database synchronized additional stored procedures sp_a_upgr and sp_c_upgr are added to the configuration file. The additional stored procedures sp_a_upgr and sp_c_upgr are used only during the upgrade process and use the new and the old stored procedures to update both the new and the old tables, respectively, in accordance with transactions initiated by the workstations.

For example, during an upgrade the additional stored procedure sp_a_upgr initiates at the workstation two branches of processing on the basis of base version sp_a_1.0 and new version sp_a_1.1 whereby data is processed and updated in both the new and the old tables of the database system. With respect to stored procedure sp_b, there exists no additional stored procedure since stored procedure sp_b is not upgraded, i.e. remains the same in the old and the new database. The system will refer to the basic version sp_b in such case and use the base version for both the old and the new tables.

The switch over from the old stored procedure to the new stored procedures is performed by updating the configuration file and reread it. To update and reread the configuration file is a very fast operation, so that the users of the system will only experience a small delay and no downtime.

A third method for handling versions of database components could be a combination of a systemtable and a configuration file. The systemtable will refer to some stored procedures while the configuration file will refer to other stored procedures.

The other components of the database can be handled in the same manner. For example, to be able to hold two or more versions of tables, the tables could be referenced through the systemtable or configuration file and treated similarly as outlined above with respect of stored procedures.

## Claims

1. Method for upgrading a database using a table for storing data and a component providing database functionality, said database running on a computer system, comprising the steps of:
- creating a new table in said database;
- copying and/or transforming data from said table to said new table;
- adding a new version (sp_a_1.1, sp_b_1.1) of said component providing database functionality corresponding to said new table to said database; and
- adding an additional component providing database functionality (sp_a_upgr, sp_b_upgr,...) to the database which refers to both the previous version (sp_a_1.0, sp_b_1.0) and the new version (sp_a_1.1, sp_b_1.1) of the component providing database functionality whenever the component providing database functionality is used, for causing data processing to take place in accordance with the previous version (sp_a_1.0, sp_b_1.0) and the new version (sp_a_1.1, sp_b_1.1) of the component providing database functionality, whereby data is processed in both the old and the new table.

2. Method for upgrading a database according to Claim 1 **characterized in that** a systemtable creates a link to said additional component providing database functionality (sp_a_upgr, sp_c_upgr).

3. Method for upgrading a database according to Claim 2 **characterized in that** said systemtable is a table of said database.

4. Method for upgrading a database according to Claim 1, 2 or 3 **characterized in that** a configuration file creates a link to said additional stored component providing database functionality (sp_a_upgr, sp_c_upgr).

5. Method for upgrading a database according to Claim 4 **characterized in that** said configuration file is stored on a storage medium (4) of said computer system.

6. Method according to any one of Claims 1 to 5 **characterized in** said component of the database is a stored procedure.

7. Method according to any one of Claims 1 to 5 **characterized in that** said component of the database is a trigger.

8. Method according to any one of Claims 1 to 5 **characterized in that** said component of the database is any index.

9. Method according to any one of Claims 1 to 5 **characterized in that** said component of the database is a table.

10. Method according to Claim 9 **characterized in that** the new version of said table has a format different from the format of the old version of said table.

## Patentansprüche

1. Verfahren zum Erweitern einer Datenbank unter Verwendung einer Tabelle zum Speichern von Daten und einer Komponente, die eine Datenbankfunktionalität zur Verfügung stellt, wobei die Datenbank auf einem Computersystem läuft, welches Verfahren die folgenden Schritte aufweist:
- Erzeugen einer neuen Tabelle in der Datenbank;
- Kopieren und/oder Transformieren von Daten von der Tabelle zu der neuen Tabelle;
- Hinzufügen einer neuen Version (sp_a_1.1, sp_b_1.1) der Komponente, die eine Datenbankfunktionalität zur Verfügung stellt, entsprechend der neuen Tabelle zu der Datenbank; und
- Hinzufügen einer zusätzlichen Komponente (sp_a_upgr, sp_b_upgr, ...), die eine Datenbankfunktionalität zur Verfügung stellt, zu der Datenbank, welche sich auf sowohl die vorherige Version (sp_a_1.0, sp_b_1.0) als auch die neue Version (sp_a_1.1, sp_b_1.1) der Komponente bezieht, die eine Datenbankfunktionalität zur Verfügung stellt, wann immer die Komponente, die eine Datenbankfunktionalität zur Verfügung stellt, verwendet wird, um zu veranlassen, dass eine Datenverarbeitung gemäß der vorherigen Version (sp_a_1.0, sp_b_1.0) und der neuen Version (sp_a_1.1, sp_b_1.1) der Komponente, die eine Datenbankfunktionalität zur Verfügung stellt, stattfindet, wodurch Daten in sowohl der alten als auch der neuen Tabelle verarbeitet werden.

2. Verfahren zum Erweitern einer Datenbank gemäß Anspruch 1, **dadurch gekennzeichnet, dass** eine Systemtabelle eine Verwendung zu der zusätzlichen Komponente (sp_a_upgr, sp_c_upgr), die eine Datenbankfunktionalität zur Verfügung stellt, erzeugt.

3. Verfahren zum Erweitern einer Datenbank gemäß Anspruch 2, **dadurch gekennzeichnet, dass** die Systemtabelle eine Tabelle der Datenbank ist.

4. Verfahren zum Erweitern einer Datenbank gemäß Anspruch 1, 2 oder 3, **dadurch gekennzeichnet, dass** eine Konfigurationsdatei eine Verwendung zu der zusätzlichen gespeicherten Komponente (sp_a_upgr, sp_c_upgr), die eine Datenbankfunktionalität zur Verfügung stellt, erzeugt.

5. Verfahren zum Erweitern einer Datenbank gemäß Anspruch 4, **dadurch gekennzeichnet, dass** die Konfigurationsdatei auf einem Speichermedium (4) des Computersystems gespeichert wird.

6. Verfahren gemäß einem der Ansprüche 1 bis 5, **dadurch gekennzeichnet, dass** die Komponente der Datenbank eine gespeicherte Prozedur ist.

7. Verfahren nach einem der Ansprüche 1 bis 5, **dadurch gekennzeichnet, dass** die Komponente der Datenbank ein Trigger ist.

8. Verfahren nach einem der Ansprüche 1 bis 5, **dadurch gekennzeichnet, dass** die Komponente der Datenbank irgendein Index ist.

9. Verfahren nach einem der Ansprüche 1 bis 5, **dadurch gekennzeichnet, dass** die Komponente der Datenbank eine Tabelle ist.

10. Verfahren nach Anspruch 9, **dadurch gekennzeichnet, dass** die neue Version der Tabelle ein Format hat, das unterschiedlich von dem Format der alten Version der Tabelle ist.

## Revendications

1. Procédé d'extension d'une base de données, utilisant une table pour mémoriser des données, et un composant assurant la fonctionnalité de base de données, ladite base de données passant sur un système d'ordinateur, comprenant les étapes consistant à :
- créer une nouvelle table dans ladite base de données ;
- copier et/ou transformer des données de ladite table à ladite nouvelle table ;
- ajouter une nouvelle version (sp_a_1.1, sp_b_1.1) dudit composant assurant la fonctionnalité de base de données, correspondant à ladite nouvelle table, dans ladite base de données ; et
- ajouter un composant supplémentaire assurant la fonctionnalité de base de données (sp_a_upgr, Sp_b_upgr, ...) à la base de données, qui se réfère à la fois à la version précédente (sp_a_1.0, sp_b_1.0) et à la nouvelle version (sp_a_1.1, sp_b_1.1) du composant assurant la fonctionnalité de base de données, chaque fois que le composant assurant la fonctionnalité de base de données est utilisé, afin que le traitement des données soit amené à être effectué conformément à la version précédente (sp_a_1.0, sp_b_1.0) et à la nouvelle version (sp_a_1.1, sp_b_1.1) du composant assurant la fonctionnalité de base de données, des données étant traitées à la fois dans l'ancienne et dans la nouvelle table.

2. Procédé d'extension d'une base de données selon la revendication 1, **caractérisé en ce qu'**une table système crée un lien vers ledit composant supplémentaire assurant la fonctionnalité de base de données (sp_a_upgr, sp_c_upgr).

3. Procédé d'extension d'une base de données selon la revendication 2, **caractérisé en ce que** ladite table système est une table de ladite base de données.

4. Procédé d'extension d'une base de données selon la revendication 1, 2 ou 3, **caractérisé en ce qu'**un fichier de configuration crée un lien vers ledit composant supplémentaire mémorisé, assurant la fonctionnalité de base de données (sp_a_upgr, sp_c_upgr).

5. Procédé d'extension d'une base de données selon la revendication 4, **caractérisé en ce que** ledit fichier de configuration est mémorisé sur un support de memoire (4) dudit système d'ordinateur.

6. Procédé selon l'une quelconque des revendications 1 à 5, **caractérisé en ce que** ledit composant de la base de données est une procédure mémorisée.

7. Procédé selon l'une quelconque des revendications 1 à 5, **caractérisé en ce que** ledit composant de la base de données est un déclencheur.

8. Procédé selon l'une quelconque des revendications 1 à 5, **caractérisé en ce que** ledit composant de la base de données est un index quelconque.

9. Procédé selon l'une quelconque des revendications 1 à 5, **caractérisé en ce que** ledit composant de la base de données est une table.

10. Procédé selon la revendication 9, **caractérisé en ce que** la nouvelle version de la table a un format, qui est différent du format de la version ancienne de ladite table.
